# EUROPÄISCHE PATENTSCHRIFT

(11) **EP 2 018 280 B1**
(45) Veröffentlichungstag und Bekanntmachung des Hinweises auf die Patenterteilung: **10.10.2012**
(21) Anmeldenummer: 07722400.4
(22) Anmeldetag: 10.05.2007
(51) Int. Cl.: F16C 19/18, B62D 7/18, B60B 27/00, F16C 33/58, F16C 35/067

(54) **VERBINDUNGSANORDNUNG AN EINEM KRAFTFAHRZEUG ZWISCHEN EINEM LAGERAUSSENRING EINES WÄLZLAGERS UND EINEM RADTRÄGER SOWIE VERFAHREN ZUR HERSTELLUNG EINER DERARTIGEN VERBINDUNGSANORDNUNG**
ASSEMBLY ON A MOTOR VEHICLE FOR CONNECTING AN OUTER BEARING RING OF A ROLLING BEARING AND A WHEEL SUPPORT, AND METHOD FOR THE PRODUCTION OF SUCH A CONNECTING ASSEMBLY
SYSTÈME D'ASSEMBLAGE SUR UN VÉHICULE AUTOMOBILE ENTRE UNE BAGUE EXTÉRIEURE D'UN PALIER À ROULEMENT ET UN SUPPORT DE ROUE ET PROCÉDÉ DE FABRICATION D'UN SYSTÈME D'ASSEMBLAGE DE CE TYPE

(30) Priorität: 19.05.2006 DE 102006023547
(43) Veröffentlichungstag der Anmeldung: 28.01.2009
(73) Patentinhaber: Schaeffler Technologies AG & Co. KG, 91074 Herzogenaurach (DE)
(72) Erfinder: FISCHER, Raphael, 97422 Schweinfurt (DE); NIEBLING, Peter, 97688 Bad Kissingen (DE); HECKER, Christian, 90768 Fürth (DE); DLUGAI, Darius, 97421 Schweinfurt (DE); HUND, Ralf, 73577 Ruppertshofen (DE)
(86) Internationale Anmeldenummer: PCT/DE2007/000851
(87) Internationale Veröffentlichungsnummer: WO 2007/134570

(56) Entgegenhaltungen:
- EP-A- 0 794 072
- EP-A- 1 424 217
- DE-A1-102004 055 204
- DE-U1- 20 108 362

## Beschreibung

### Gebiet der Erfindung

Die Erfindung betrifft eine Verbindungsanordnung an einem Kraftfahrzeug zwischen einem Lageraußenring eines Wälzlagers und einem Radträger, wobei der Radträger durch zwei zu einem Hohlprofil fest verbindbare schalenförmige Blechformteile gebildet ist, und die Blechformteile jeweils eine koaxial zur Drehachse des Wälzlagers kreisförmige Öffnung aufweisen, die zueinander beabstandet angeordnet sind. Die Erfindung betrifft ferner ein Verfahren zur Herstellung einer derartigen Verbindungsanordnung.

### Hintergrund der Erfindung

Verbindungsanordnungen zwischen einem Wälzlager und einem Radträger sind seit langem in den unterschiedlichsten Ausführungsformen bekannt, wie beispiels weise aus der gattungsgemäßen DE 10 2004 055204A. weiterhin ist aus der DE 44 36 789 A1 bekannt, den Lageraußenring eines zweireihigen Rillenkugellagers in einer Durchgangsbohrung des Radträgers mit Presssitz festzulegen. Die axiale Sicherung des Lageraußenringes ist durch einen Sprengring sichergestellt, welches mit erhöhtem Gewicht und erhöhtem Fertigungsaufwand einhergeht.

Die DE 103 59 649 A1 und die DE 196 13 441 A1 offenbaren eine Radlagereinheit mit einer Nabe, auf weicher zumindest ein Innenring aufgeschoben ist, der zusammen mit Wälzkörpern und einem einteiligen Außenring die Radlagerung bilden. Die axiale Fixierung und Vorspannung der Innenringe auf der Nabe wird durch einen mit Hilfe einer plastischen Kaltverformung mittels Wälznieten erzeugten, am Nabenende angeformten radialen Wulst realisiert.

Ferner ist aus der DE 199 15 633 A1 ein Schwenklager für die Vorderachse eines frontgetriebenen Kraftfahrzeugs mit einem Grundkörper bekannt, welcher aus miteinander verbindbaren Blechformteilen beziehungsweise aus einer Innen- und einer Außenschale besteht, an denen Bauteile für die Radaufhängung und Radführung sowie Radbremsung befestigt sind. Es wird dort vorgeschlagen, die Blechformteile mittels eines Tiefziehvorganges herzustellen, welche dann über eine Schweißverbindung aneinander gefügt einen Hohlkörper mit mehreren Anbindungsflächen für die vorstehenden Bauteile bilden. In eine Öffnung des Grundkörpers ist eine rohrförmige Radlageraufnahme, auch als Sitzring bezeichnet, einsetzbar und mit dem Grundkörper durch Schweißung fest verbindbar.

Herkömmlich wird das Radlager in der genannten Radiageraufnahme bzw. in den Sitzring eingepresst. Auch diese Lösung erfordert eine ergänzende Axialsicherung, um unter anderem ein zu unerwünschten Geräuschen führendes axiales Wandern des Lageraußenringes zu unterbinden.

### Aufgabe der Erfindung

Der Erfindung liegt die Aufgabe zugrunde, eine Verbindungsanordnung an einem Kraftfahrzeug zwischen einem Lageraußenring eines Wälzlagers und einem aus schalenförmigen Blechformteilen gebildeten Radträger, wie er z. B. aus der DE 199 15 633 A1 bekannt ist, zu schaffen, welche einerseits einfacher und kostengünstiger herstellbar ist, und andererseits separate und demgemäß zusätzliche sowie demgemäß aufwendige Maßnahmen zur Axialsicherung des Lageraußenringes vermeidet.

Eine weitere Aufgabe besteht darin, ein geeignetes Verfahren zur Herstellung einer derartigen Verbindungsanordnung anzugeben.

### Zusammenfassung der Erfindung

Die Erfindung löst diese Aufgabe durch eine Verbindungsanordnung gemäß den Merkmalen des Hauptanspruchs sowie durch ein Herstellverfahren gemäß dem nebengeordneten unabhängigen Verfahrensanspruch.

Vorteilhafte Weiterbildungen und Ausgestaltungen der Erfindung sind den jeweils zugeordneten Unteransprüchen entnehmbar.

Die Erfindung geht daher zunächst aus von einer Verbindungsanordnung an einem Kraftfahrzeug zwischen einem Lageraußenring eines Wälzlagers und einem Radträger, wobei der Radträger durch zwei zu einem Hohlprofil fest verbindbare schalenförmige Blechformteile gebildet ist.

Vorteilhaft weiterbildend kann hier vorgesehen sein, dass die Blechformteile quer zur Drehachse des Wälzlagers angeordnet sind. Im Hinblick auf die Verbindbarkeit der Schalenteile, wird weiterbildend vorgeschlagen, dass diese durch eine Verbindung mittels Schweißung, Kleben, Löten, Stanznieten, Nieten, Clinchen oder Verschrauben verbindbar sind.

Weiterhin weisen erfindungsgemäß die Blechformteile jeweils eine koaxial zur Drehachse des Wälzlagers kreisförmige Öffnung auf, die zueinander unter Abstand angeordnet sind.

Außerdem ist bei dieser Verbindungsanordnung vorgesehen, dass der genannte Abstand von einem Distanzring eingenommen ist, welcher sich innen an den die beiden kreisförmigen Öffnungen begrenzenden Rändern der Blechformteile axial derart abstützt, dass eine rohrförmige Lageraufnahme für den Lageraußenring des Wälzlagers gebildet ist, und dass die Blechformteile mit dem Distanzring und dem Lageraußenring des Wälzlagers durch Form- und Reibschluss fest verbunden sind.

Gemäß einer vorteilhaften Ausgestaltung der Erfindung weist der Lageraußenring des Wälzlagers einenends einen radial abgestellten Ringflansch auf, mittels dem sich der Lageraußenring im montierten Zustand an der zugeordneten äußeren Stirnseite der gebildeten rohrförmigen Lageraufnahme axial abstützt.

Am gegenüberliegenden Ende kann gemäß einer vorteilhaften Ausgestaltung der Lageraußenring einen die Lageraufnahme axial überragenden Ringabschnitt aufweisen, der durch Umformung zu einem Bund umformbar und an der anderen äußeren Stirnseite der rohrförmigen Lageraufnahme axial festlegbar ist.

Die Umformung kann dabei mittels Kaltumformung, beispielsweise plastisches Kaltumformen durch Wälznietung, oder auch mittels Warmumformung, beispielsweise durch induktives Erwärmen und Umlegen, bewirkt werden.

Diese derartige axiale Festlegung bzw. Abstützung des Lageraußenrings durch einen bereits bestehenden Bund einerends und/oder einen zu bildende Bund andererends kann - was in Kombinationen durch die Erfindung mit umfasst ist - auch nur einseitig durch einen der vorgenannten Bunde oder auch spiegelbildlich beidseitig durch jeweils einen der vorgenannten Bunde ausgeführt sein.

Die axiale Festlegung bzw. auch Abstützung des Außenrings kann auch dadurch bewerkstelligt werden, dass die Lageraufnahme entsprechend dem Außenring abgestufte bzw. konische Querschnitte aufweist.

Entsprechend einer besonders bevorzugten Ausführungsform ist der die Lageraufnahme axial überragende Ringabschnitt des Lageraußenringes des Wälzlagers zur Herstellung der Verbindungsanordnung durch ein Wälznietverfahren umformbar, insbesondere kalt umformbar, ausgebildet.

Des Weiteren wird vorgeschlagen, dass der Distanzring derart nachgiebig ausgebildet ist, dass der Verbund aus Blechformteilen, Distanzring und Lageraußenring des Wälzlagers durch die Umformung des die Lageraufnahme überragenden Ringabschnittes in sich verspannbar ist. Hierzu kann der Distanzring in einem mittleren Ringabschnitt eine oder mehrere radiale Einschnürungen aufweisen. Ebenso kann der Distanzring auch als zylindrisches Umformteil mit beidenends radial nach innen weisenden Radialstegen und einer gegebenenfalls vorzusehenden Taillierung bzw. radialen Einschnürung ausgebildet sein.

Auch kann der Distanzring als Wellenring ausgebildet sein.

Weiter wird vorgeschlagen, dass Stoßkanten des Distanzrings untereinander durch Verschweißen, Verclinchung und/oder ähnlichen Verfahren verbunden sind.

Wie die Erfindung weiter vorsehen kann, können die beiden die kreisförmigen Öffnungen begrenzenden Ränder der Blechformteile eine umlaufende Verdickung aufweisen, welche durch Umlegen oder durch Stauchung des jeweiligen Randes gebildet sein kann.

Zudem kann vorgesehen sein, dass sich die verwendeten Werkstoffe der jeweils benachbarten Bauteile in Form des Distanzringes und der Blechformteile in ihrer Härte derart unterscheiden, dass durch die besagte Umformung des die Lageraufnahme axial überragenden Ringabschnittes des Lageraußenringes gleichzeitig eine Umformung der Anschlusskontur des Bauteils mit dem weicheren Werkstoff sowie Anschmiegen desselben an die Anschlusskontur des Bauteils mit dem härteren Werkstoff bewirkt ist.

Die Anschlusskontur des Bauteils mit dem härteren Werkstoff kann hierbei derart mit einer Profilierung ausgebildet sein, dass durch die Umformung der Anschlusskontur des Bauteils mit dem weicheren Werkstoff und Anschmiegen desselben an die Anschlusskontur des Bauteils mit dem härteren Werkstoff eine formschlüssige Verbindung zwischen den Anschlusskonturen der benachbarten Bauteile bewirkt ist.

Der Formschluss kann aber auch durch vorgeformte Geometrien, beispielsweise einem Hinterschnitt, an den Kontaktstellen ohne nennenswerte Umformung bei der Montage bewirkt werden.

Das Verfahren zur Herstellung einer Verbindungsanordnung an einem Kraftfahrzeug zwischen einem Lageraußenring eines Wälzlagers und einem Radträger, wobei der Radträger durch zwei zu einem Hohlprofil fest verbindbare schalenförmige Blechformteile gebildet ist und die Blechformteile jeweils eine koaxial zur Drehachse des Wälzlagers kreisförmige Öffnung aufweisen, die zueinander beabstandet angeordnet sind, zeichnet sich durch folgende nacheinander durchzuführende Verfahrensschritte aus:
a) Zwischen den beiden zueinander beabstandeten kreisförmigen Öffnungen der Blechformteile wird ein sich innen an den beiden die Öffnungen begrenzenden Rändern der Blechformteile axial abstützender Distanzring derart positioniert, dass eine rohrförmige Lageraufnahme für den Lageraußenring des Wälzlagers gebildet wird.
b) Die beiden Blechformteile werden untereinander fest verbunden.
c) Ein an einem Ende mit einem im montierten Zustand die gebildete ringförmige Lageraufnahme axial überragenden Ringabschnitt ausgebildeter Lageraußenring wird in die Lageraufnahme eingeschoben.
d) Der die Lageraufnahme axial überragende Ringabschnitt des Lageraußenringes wird durch Umformung zu einem Bund umgeformt.

Im Hinblick auf den Verfahrensschritt a) können die beiden die kreisförmigen Öffnungen begrenzenden Ränder der Blechformteile jeweils vorab mit einer umlaufenden Verdickung versehen werden. Die Verdickungen können ihrerseits durch Umlegen oder Stauchen des jeweiligen Randes gebildet werden. Im Hinblick auf den Verfahrensschritt b), wird vorgeschlagen, dass die beiden Blechformteile miteinander durch Schweißung fest verbunden werden. Andere Verbindungen, wie Kleben, Löten, Stanznieten, Nieten, Clinchen oder Verschrauben, sind auch möglich.

Weiter wird vorgeschlagen, dass im Hinblick auf den Verfahrensschritt d) der die Lageraufnahme axial überragende Ringabschnitt des Lageraußenringes des Wälzlagers nach einem Wälznietverfahren umgeformt, insbesondere kalt umgeformt, wird.

Weiterhin wird vorgeschlagen, dass in Hinblick auf den Verfahrensschritt d), mit welchen eine axiale Festlegung des Lageraußenrings und/oder eine axiale Abstützung des Lageraußenrings (an einem Ende) bewirkt wird, auch vorgesehen sein kann, dass an dem anderen Ende des Lageraußenrings bereits ein Bord besteht oder ein solcher durch Umformung, insbesondere gemäß Verfahrensschritt d), gebildet wird.

Die axiale Festlegung bzw. auch Abstützung des Außenrings kann auch dadurch bewerkstelligt werden, dass die Lageraufnahme entsprechend dem Lageraußenring abgestufte bzw. konische Querschnitte aufweist.

Gemäß einer weiteren vorteilhaften Weiterbildung der Erfindung wird ein Distanzring verwendet, welcher derart nachgiebig ausgebildet ist, dass der Verbund aus Blechformteilen, Distanzring und Lageraußenring des Wälzlagers durch die Umformung des die Lageraufnahme überragenden Ringabschnittes in sich verspannt wird.

So kann beispielsweise ein Distanzring verwendet werden, der in einem mittleren Ringabschnitt eine oder mehrere radiale Einschnürungen aufweist. Demgegenüber kann auch ein Distanzring als zylindrisches Umformteil mit beidenends nach radial innen weisenden Radialstegen und gegebenenfalls vorzusehender radialer Taillierung bzw. Einschnürung verwendet werden.

Auch ein gewellter Distanzring kann verwendet werden.

Eine weitere Maßnahme sieht vor, dass für die jeweils benachbarten Bauteile in Form des Distanzrings und der Blechformteile Werkstoffe verwendet werden, die sich in ihrer Härte derart unterscheiden, dass durch die Umformung des die Lageraufnahme überragenden Ringabschnittes des Lageraußenringes gleichzeitig eine Umformung der Anschlusskontur des Bauteils mit dem weicheren Werkstoff und Anschmiegen desselben an die Anschlusskontur des Bauteils mit dem härteren Werkstoff bewirkt wird.

Schließlich kann die Anschlusskontur des Bauteils mit dem härteren Werkstoff derart mit einer Profilierung ausgebildet werden, dass durch Umformung der Anschlusskontur des Bauteils mit dem weicheren Werkstoff und Anschmiegen desselben an die Anschlusskontur des Bauteils mit dem härteren Werkstoff eine formschlüssige Verbindung zwischen den Anschlusskonturen der benachbarten Bauteile bewirkt wird.

Die vorgeschlagene Verbindungsanordnung bzw. das vorgeschlagene Verfahren zur Herstellung einer derartigen Verbindungsanordnung haben im Vergleich zum auf den Stand der Technik mehrere Vorteile.

Zum einen ist diese besonders einfach und kostengünstig herstellbar, da, abgesehen von der Verbindung der beiden Blechformteile untereinander durch beispielsweise Schweißung, der Verbund aus dem durch Blechformteilen gebildeten Hohlprofil und dem Distanzring sowie dem Lageraußenring ausschließlich durch Form- und Reibschluss zu bewerkstelligen ist. Es ist während der Montage lediglich das eine freie Ende des Lageraußenrings beziehungsweise der die Lageraufnahme überragenden Ringabschnitt des Lageraußenringes nach einem Umformverfahren zu einem Bund umzuformen und an der betreffenden äußeren Stirnseite der Lageraufnahme festzulegen.

Zusätzliche stoffschlüssige Maßnahmen, wie sie der Stand der Technik in Form des Verschweißens beispielsweise eines Sitzringes mit den Blechformteilen vorsieht, sind nunmehr entbehrlich.

Zum anderen ist durch die besondere Anordnung des Distanzringes und die Art der Befestigung eine erhöhte Klemmkraft zu verzeichnen, da der Distanzring sozusagen als Druckfeder wirkt und im Hinblick auf ein etwaiges Setzverhalten des Verbundes demgemäß höhere Reserven bietet.

### Kurze Beschreibung der Zeichnungen

Die Erfindung wird im Folgenden anhand der beiliegenden Zeichnungen an einigen Ausführungsformen näher erläutert. Darin zeigen:
- Fig. 1: eine erfindungsgemäße Verbindungsanordnung in einem Längsschnitt zu Beginn des Zusammenbaues derselben,
- Fig. 2: die Verbindungsanordnung gemäß Fig. 1 während ihres Zusammenbaues zu einem fortgeschrittenen Zeitpunkt,
- Fig. 3: die Verbindungsanordnung gemäß Fig. 1 und Fig. 2 im fertig montierten Zustand,
- Fig. 4a bis 4d: mögliche vorteilhafte Ausbildungen des Distanzringes,
- Fig. 5a und 5b: eine erste vorteilhafte Ausgestaltung der die kreisförmigen Öffnungen der Blechformteile begrenzenden Ränder vor und nach der Montage,
- Fig. 6a und 6b: weitere vorteilhafte Ausgestaltung der Ränder und
- Fig. 7a bis c: eine mögliche vorteilhafte Ausgestaltung des Distanzrings.

### Detaillierte Beschreibung der Zeichnungen

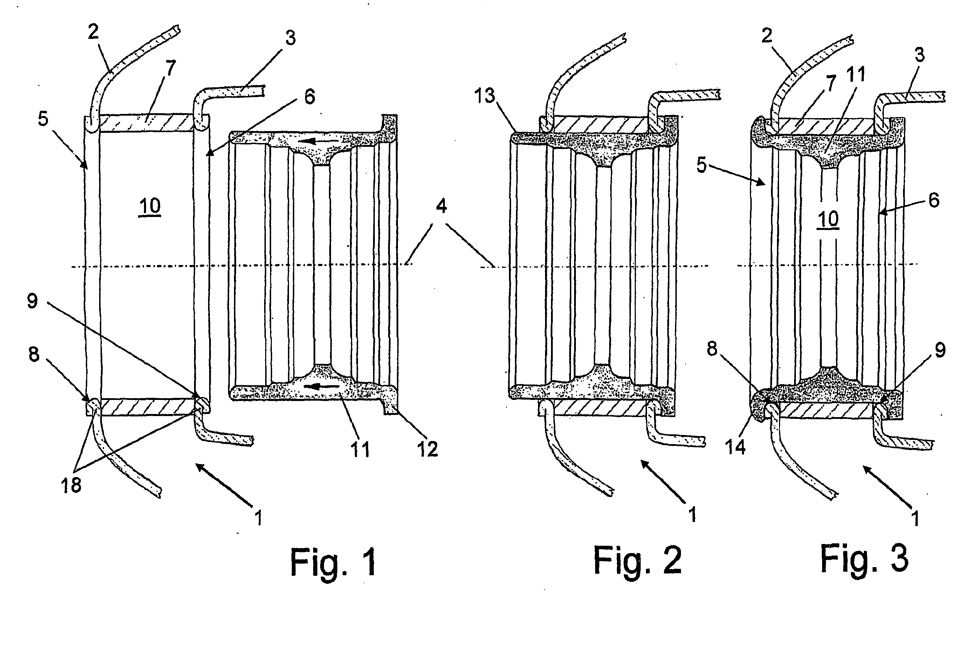

Wie in der Querschnittszeichnung der Fig. 1 schematisch dargestellt und durch die eingangs bereits erwähnte DE 199 15 633 A1 bekannt ist, besteht der Radträger 1 aus zwei schalenförmigen Blechformteilen 2 und 3, nämlich einem äußeren und einem inneren Blechformteil, die ihrerseits quer zur Drehachse 4 eines im Detail nicht näher gezeigten Wälzlagers angeordnet sind.

Die beiden Blechformteile 2 und 3 sind zu einem Hohlprofil fest verbindbar und dazu vorzugsweise im Bereich von nicht näher gezeigten Anbindungsflächen untereinander verschweißt. Die beiden Blechformteile 2 und 3 weisen jeweils eine koaxial zur Drehachse 4 des Wälzlagers kreisförmige Öffnung 5 bzw. 6 auf, die axial zueinander beabstandet sind. Dieser Abstand zwischen den beiden Öffnungen 5 und 6 wird von einem Distanzring 7 aus Stahl oder einem anderen geeigneten Werkstoff eingenommen, indem derselbe beim Zusammenbau des Radträgers 1 zwischen die beiden die kreisförmigen Öffnungen 5 und 6 begrenzenden Ränder 8, 9 der Blechformteile 2, 3 eingelegt wird. Dies erfolgt so, dass sich der Distanzring 7 an den gegenüber liegenden Rändern 8, 9 der Blechformteile 2 und 3 axial derart abstützt, dass eine rohrförmige Lageraufnahme 10 für einen Lageraußenring 11 des Wälzlagers gebildet ist.

Der Lageraußenring 11, dessen Außenkontur weitestgehend zylindrisch ausgebildet ist, weist einenends einen radial abgestellten Ringflansch 12 auf, mittels dem dieser im montierten Zustand, also nach einem axialen Einführen desselben in die rohrförmige Lageraufnahme 10, an einer zugeordneten axial äußeren Stirnseite der Lageraufnahme 10 axial abstützt (Fig. 2). Anderenends weist der Lageraußenring 11 einen die Lageraufnahme 10 axial überragenden Ringabschnitt 13 auf. Dieser Ringabschnitt 13 ist, wie in Fig. 3 dargestellt ist, durch Umformung - beispielsweise in diesem Fall durch Kaltumformung - zu einem Bund 14 umformbar und dann an der anderen Stirnseite der rohrförmigen Lageraufnahme 10 axial festgelegt. Zur Erzeugung des besagten Bundes 14 bietet sich insbesondere das an sich bekannte Wälznietverfahren an.

Durch diesen Aufbau sind die zu einem Hohlprofil verbundenen Blechformteile 2 und 3 sowohl mit dem Distanzring 7 als auch mit dem Lageraußenring 11 des Wälzlagers form- und reibschlüssig fest verbunden, indem aus dem Ringabschnitt 13 der an die äußere Stirnseite festgelegte Bund 14 durch Vernieten gebildet wird. Weitere Befestigungsmaßnahmen wie sie der Stand der Technik vorsieht, beispielsweise Schweißverbindungen, sind nunmehr entbehrlich.

Als besonders vorteilhaft hat es sich erwiesen, wenn der Distanzring 7 begrenzt nachgiebig hergestellt ist. So kann dieser während der Montage insbesondere durch die Umformung des Ringabschnittes 13 des Lageraußenringes 11 in Grenzen elastisch verformt werden, wodurch der Verbund aus den beiden Blechformteilen 2 und 3, dem Distanzring 7 und Lageraußenring 11 zu einer festen Baugruppe verspannt ist. Der Distanzring 7 wirkt dabei als Druckfeder und bietet höhere Klemmkräfte sowie größere Reserven im Hinblick auf ein Setzverhalten des gebildeten Verbundes.

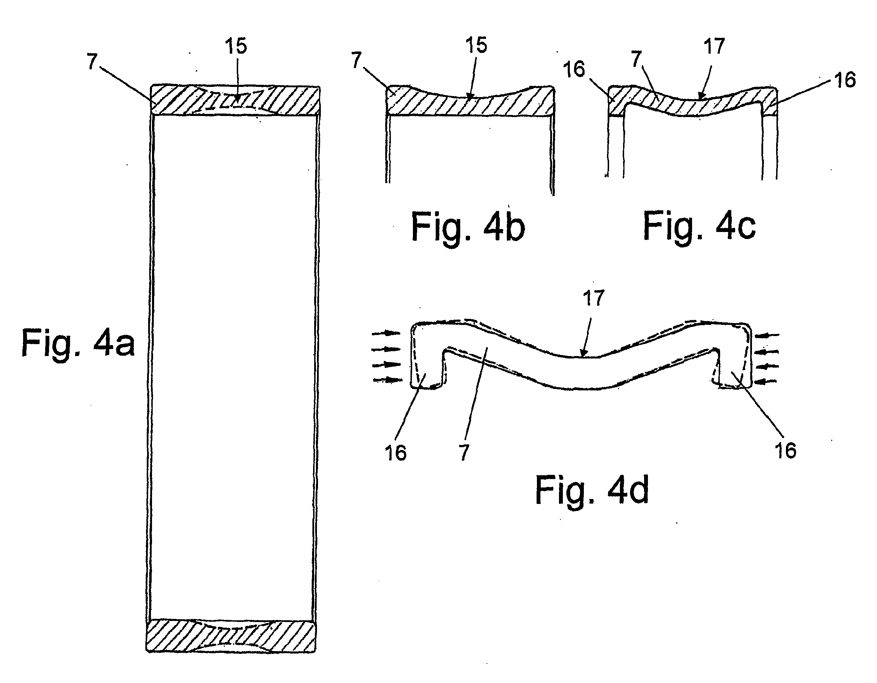

Fig. 4a zeigt in einem Axialschnitt einen derartig ausgebildeten Distanzring 7 mit einer zylindrischen Grundform, welcher in einem mittleren Ringabschnitt vorliegend eine von der Innen- und der Außenkontur des Distanzringes 7 ausgehende radial nach innen bzw. außen gerichtete Einschnürung 15 aufweist.

Selbstverständlich sind auch mehrere axial hintereinander angeordnete Einschnürungen 15 auf der Innen- und/oder Außenseite bzw. -kontur möglich und sind demgemäß durch die Erfindung mit erfasst.Ebenso kann, wie in Fig. 4b gezeigt, die Einschnürung 15 auch lediglich auf die Außenkontur oder auch auf die Innenkontur des Distanzringes 7 beschränkt sein.

Die Einschnürung 15 sorgt im besagten mittleren Ringabschnitt für die gewünschte Nachgiebigkeit, wogegen im Randbereich der höhere Bord stützt.

Fig. 4c zeigt dagegen einen Distanzring 7 als zylindrisches Blech-Umformteil mit an den axialen Enden nach innen weisenden Radialstegen 16 sowie einer Taillierung 17. Auch durch diese besondere Ausbildung des Distanzringes 7 ist die gewünschte Nachgiebigkeit desselben erzielbar, indem, wie in Fig. 4d schematisch dargestellt, die freien Enden beziehungsweise die Radialstege 16 des Distanzringes 7 durch die Kraftbeaufschlagung infolge der Umformung des Ringabschnittes 13 des Lageraußenringes 11 bzw. der Nietkraft ausweichen und demgemäß den Formschluss zu den Blechformteilen 2 und 3 des Radträgers 1 vorteilhaft erleichtern.

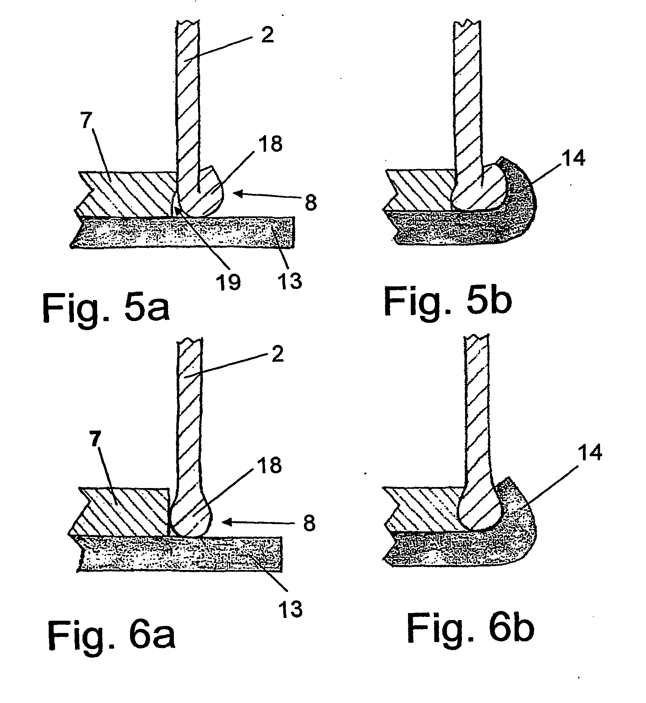

Um den Reibschluss in der Nietverbindung weiter vorteilhaft zu unterstützen, hat es sich als zweckmäßig erwiesen, die beiden die kreisförmigen Öffnungen 5 und 6 begrenzenden Ränder 8 und 9 der Blechformteile 2 bzw. 3 vorab mit einer umlaufenden Verdickung 18 zu versehen. Die Verdickungen 18 können durch Umlegen des jeweiligen Randes 8 bzw. 9 (Figuren 1 bis 3, 5a, 5b) oder durch Stauchung der Enden derselben (Fig. 6a, 6b) gebildet sein.

Ist der verwendete Werkstoff der Blechformteile 2 und 3 bzw. der genannten Verdickungen 18 weicher als der Werkstoff des angeschlossenen Distanzringes 7, und weist der Distanzring 7 beispielsweise im Bereich seiner Anschlusskontur eine Profilierung 19 auf, so wird infolge der durch die Umformung des die Lageraufnahme 10 axial überragenden Ringabschnittes 13 einwirkenden Axialkraft gleichzeitig eine Umformung der Anschlusskontur der Ränder 8 und 9 der Blechformteile 2, 3 bewirkt, indem dieselben sich an die aus einem härteren Werkstoff bestehende Anschlusskontur des vorliegend mit einer Profilierung 19 ausgebildeten Distanzringes 7 anschmiegen und mit demselben einen Formschluss eingehen (vergleiche insbesondere Fig. 5a und 5b).

Die Figuren 6a und 6b zeigen eine dazu entgegengesetzte Ausbildung der Bauteile, indem gestauchte Ränder 8 und 9 der Blechformteile 2 bzw. 3 aus einem härteren Werkstoff bestehen als der Distanzring 7 und demgemäß sich Material der Anschlusskontur des Distanzringes 7 an die Anschlusskontur der Blechformteile 2, 3 bzw. an deren Ränder 8, 9 plastisch anschmiegt, vorliegend einen tropfenförmigen Querschnitt der Ränder 8, 9 zusammen mit dem umgeformten Bund 14 des Ringabschnittes 13 des Lageraußenringes 11 wenigstens teilweise umschließt.

Ist der Lageraußenring 11 wie vorstehend beschrieben fest am Radträger 1 montiert, so kann dieser in an sich bekannter Art und Weise mit allen weiteren erforderlichen Lager- und Anbauteilen, wie Lagerinnenring, Wälzkörper, Radnabe etc. komplettiert werden (nicht näher dargestellt).

Ebenso ist denkbar, ein bereits komplettiertes Lager mit einem überragenden Ringabschnitt 13 in die Lageraufnahme 10 zu setzen und das Lager durch Umformung des Ringabschnitts 13 zu montieren.

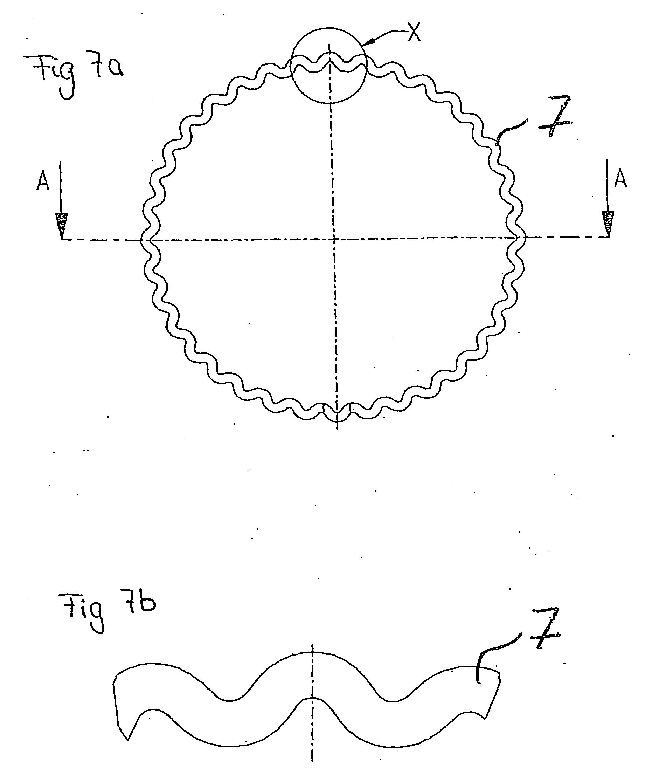

Fig. 7a bis c zeigen eine weitere mögliche vorteilhafte Ausgestaltung des Distanzrings 7, nämlich einen als Wellenring ausgebildeten Distanzring 7. Durch einen derart ausgebildeten Distanzring 7 kann Gewicht eingespart werden bei gleichzeitig möglichst breiter Anlage zur Reduzierung von Spannungsspitzen.

Fig. 7a zeigt dabei diesen gewellten Distanzring im Querschnitt. Alternativ zur gewellten Ausgestaltung des Distanzrings 7 kann dieser auch in scharfem "Zick-Zack" ausgebildet sein.

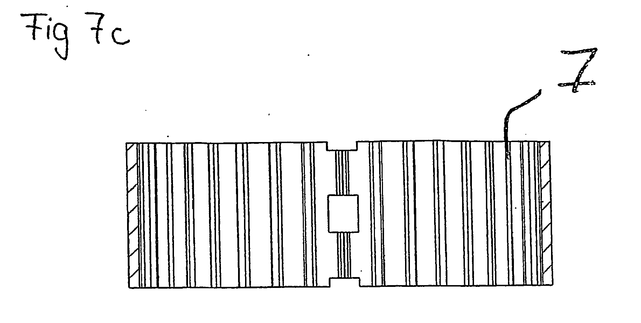

Fig. 7b zeigt den in Fig. 7a mit einem "X" gekennzeichneten Bereich im Detail; Fig. 7c zeigt einen Schnitt durch den gewellten Distanzring 7 mit Blick auf eine mögliche Ausführung einer Stoßkante.

Wie Fig. 7c zeigt ist in diesem Fall ein verschweißter Stumpfstoß dargestellt. Alternativ zur Verschweißung kann die Verbindung auch durch Clinchen realisiert werden.

### Bezugszeichen

- 1: Radträger
- 2: äußeres Blechformteil
- 3: inneres Blechformteil
- 4: Drehachse
- 5: Öffnung im Blechformteil 2
- 6: Öffnung im Blechformteil 3
- 7: Distanzring
- 8: Rand an Öffnung 5
- 9: Rand an Öffnung 6
- 10: Lageraufnahme
- 11: Lageraußenring
- 12: Ringflansch
- 13: Ringabschnitt am Lageraußenring 11
- 14: Bund
- 15: Einschnürung im Distanzring 7
- 16: Radiaisteg im Distanzring 7
- 17: Taillierung im Distanzring 7
- 18: Verdickung
- 19: Profilierung

## Patentansprüche

1. Verbindungsanordnung an einem Kraftfahrzeug zwischen einem Lageraußenring (11) eines Wälzlagers und einem Radträger (1), wobei der Radträger (1) durch zwei zu einem Hohlprofil fest verbindbare schalenförmige Blechformteile (2, 3) gebildet ist, und die Blechformteile (2, 3) jeweils eine koaxial zur Drehachse (4) des Wälzlagers kreisförmige Öffnung (5, 6) aufweisen, die zueinander unter Abstand angeordnet sind, **dadurch gekennzeichnet, dass** der genannte Abstand von einem Distanzring (7) eingenommen ist, welcher sich innen an den die beiden kreisförmigen Öffnungen (5, 6) begrenzenden Rändern (8, 9) der Blechformteile (2, 3) axial derart abstützt, dass eine rohrförmige Lageraufnahme (10) für den Lageraußenring (11) des Wälzlagers gebildet ist, und dass die Blechformteite (2, 3) mit dem Distanzring (7) und dem Lageraußenring (11) des Wälzlagers durch Form- und Reibschluss fest verbunden sind.

2. Verbindungsanordnung nach Anspruch 1, **dadurch gekennzeichnet, dass** der Lageraußenring (11) des Wälzlagers zumindest einenends einen radial abgestellten Ringflansch (12) aufweist, mittels dem sich der Lageraußenring (11) im montierten Zustand an einer zugeordneten Stirnseite der gebildeten rohrförmigen Lageraufnahme (10) axial abstützt, und/oder zumindest anderenends einen die Lageraufnahme (10) axial überragenden Ringabschnitt (13) aufweist, der durch Umformung zu einem Bund (14) umformbar und an der anderen äußeren Stirnseite der rohrförmigen Lageraufnahme (10) axial festlegbar ist.

3. Verbindungsanordnung nach Anspruch 2, **dadurch gekennzeichnet, dass** der die Lageraufnahme (10) überragende Ringabschnitt (13) des Lageraußenringes (11) des Wälzlagers nach einem Wälznietverfahren umformbar, insbesondere kalt umformbar, ist.

4. Verbindungsanordnung nach zumindest einem der Ansprüche 1 bis 3, **dadurch gekennzeichnet, dass** der Distanzring (7) derart nachgiebig ausgebildet ist, dass der Verbund aus Blechformteilen (2, 3), Distanzring (7) und Lageraußenring (11) des Wälzlagers durch Umformung des die Lageraufnahme (10) überragenden Ringabschnittes (13) in sich verspannbar ist.

5. Verbindungsanordnung nach Anspruch 4, **dadurch gekennzeichnet, dass** der Distanzring (7) in einem mittleren axialen Ringabschnitt eine oder mehrere Einschnürungen (15), insbesondere radial innen oder außen angeordnete Einschnürungen, aufweist.

6. Verbindungsanordnung nach Anspruch 4, **dadurch gekennzeichnet, dass** der Distanzring (7) als zylindrisches Umformteil mit beidenends nach innen weisenden Radialstegen (16) und etwaiger Taillierung (17) ausgebildet und/oder dass der Distanzring (7) als Wellenring ausgebildet ist.

7. Verbindungsanordnung nach zumindest einem der Ansprüche 1 bis 6, **dadurch gekennzeichnet, dass** die Blechformteile (2, 3) untereinander durch Schweißung fest verbunden und/oder dass die die Blechformteile (2, 3) quer zur Drehachse des Wälzlagers angeordnet sind.

8. Verbindungsanordnung nach zumindest einem der Ansprüche 1 bis 7, **dadurch gekennzeichnet, dass** die beiden die kreisförmigen Öffnungen (5, 6) begrenzenden Ränder (8, 9) der Blechformteile (2, 3) eine umlaufende Verdickung (18) aufweisen.

9. Verbindungsanordnung nach zumindest einem der Ansprüche 1 bis 8, **dadurch gekennzeichnet** die Lageraufnahme (10) entsprechend dem Lageraußenring (11) abgestufte bzw. konische Querschnitte aufweist.

10. Verfahren zur Herstellung einer Verbindungsanordnung an einem Kraftfahrzeug zwischen einem Lageraußenring (11) eines Wälzlagers und einem Radträger (1), wobei der Radträger (1) durch zwei zu einem Hohlprofil fest verbindbare schalenförmige Blechformteile (2, 3) gebildet ist, und die Blechformteile (2, 3) jeweils eine koaxial zur Drehachse des Wälzlagers kreisförmige Öffnung (5, 6) aufweisen, die zueinander beabstandet angeordnet sind, **gekennzeichnet durch** folgende nacheinander durchzuführende Verfahrensschritte:
a) Zwischen den beiden zueinander beabstandeten kreisförmigen Öffnungen (5, 6) der Blechformteile (2, 3) wird ein sich innen an den beiden die Öffnungen (5, 6) begrenzenden Rändern (8, 9) der Blechformteile (2, 3) axial abstützender Distanzring (7) derart positioniert, dass eine rohrförmige Lageraufnahme (10) für den Lageraußenring (11) des Wälzlagers gebildet wird.
b) Die beiden Blechformteile (2, 3) werden untereinander fest verbunden.
c) Ein an einem Ende mit einem im montierten Zustand die gebildete ringförmige Lageraufnahme (10) axial überragenden Ringabschnitt (13) ausgebildeter Lageraußenring (11) wird in die Lageraufnahme (10) eingeschoben.
d) Der die Lageraufnahme (10) axial überragende Ringabschnitt (13) des Lageraußenringes (11) wird **durch** Umformung zu einem Bund (14) umgeformt.

11. Verfahren nach Anspruch 10, **dadurch gekennzeichnet, dass** im Hinblick auf den Verfahrensschritt a) die beiden die kreisförmigen Öffnungen (5, 6) begrenzenden Ränder (8, 9) der Blechformteile (2, 3) jeweils vorab mit einer umlaufenden Verdickung (18) versehen werden.

12. Verfahren nach Anspruch 11, **dadurch gekennzeichnet, dass** die Verdickungen (18) durch Umlegen oder Stauchen des jeweiligen Randes (8, 9) der Blechformteile (2, 3) gebildet werden.

13. Verfahren nach zumindest einem der Ansprüche 10 bis 12, **dadurch gekennzeichnet, dass** im Hinblick auf den Verfahrensschritt b) die beiden Blechformteile (2, 3) untereinander durch Schweißung fest verbunden werden.

14. Verfahren nach zumindest einem der Ansprüche 10 bis 13, **dadurch gekennzeichnet, dass** im Hinblick auf den Verfahrensschritt d) der die Lageraufnahme (10) überragende Ringabschnitt (13) des Lageraußenringes (11) des Wälzlagers nach einem Wälznietverfahren umgeformt, insbesondere kalt umgeformt, wird.

15. Verfahren nach zumindest einem der Ansprüche 10 bis 14, **dadurch gekennzeichnet, dass** an dem anderen Ende des Lageraußenrings bereits ein Bord besteht oder ein solcher, insbesondere entsprechend dem Verfahrensschritt d), durch Umformung gebildet wird.

## Claims

1. Assembly on a motor vehicle for connecting an outer bearing ring (11) of a rolling bearing and a wheel support (1), wherein the wheel support (1) is formed by two saucer-type molded sheet-metal parts (2, 3) which can be connected fixedly to form a hollow profile, and the molded sheet-metal parts (2, 3) respectively have a circular opening (5, 6) which is coaxial with respect to the axis of rotation (4) of the rolling bearing, said openings being spaced apart from each other, **characterized in that** said spacing is occupied by a spacer ring (7) which is axially supported on the inside on the edges (8, 9) of the molded sheet-metal parts (2, 3), which edges delimit the two circular openings (5, 6), in such a manner that a tubular bearing receptacle (10) is formed for the outer bearing ring (11) of the rolling bearing, and **in that** the molded sheet-metal parts (2, 3) are connected fixedly to the spacer ring (7) and the outer bearing ring (11) of the rolling bearing by means of a formfitting and frictional connection.

2. Connecting assembly according to Claim 1, **characterized in that** the outer bearing ring (11) of the rolling bearing has, at least at one end, a radially deposited annular flange (12) by means of which the outer bearing ring (11), in the fitted state, is axially supported on an associated end side of the tubular bearing receptacle (10) formed, and/or has, at least at the other end, an annular section (13) which protrudes axially over the bearing receptacle (10), can be deformed by a deformation operation to form a collar (14) and can be fixed axially to the other, outer end side of the tubular bearing receptacle (10).

3. Connecting assembly according to Claim 2, **characterized in that** the annular section (13) of the outer bearing ring (11) of the rolling bearing, which annular section protrudes over the bearing receptacle (10), can be deformed, in particular can be deformed cold, by a rolling rivet process.

4. Connecting assembly according to at least one of Claims 1 to 3, **characterized in that** the spacer ring (7) is designed flexibly such that the assembly comprising molded sheet-metal parts (2, 3), spacer ring (7) and outer bearing ring (11) of the rolling bearing can be braced per se by deformation of the annular section (13) protruding over the bearing receptacle (10).

5. Connecting assembly according to Claim 4, **characterized in that** the spacer ring (7) has one or more constrictions (15), in particular constrictions arranged radially on the inside or outside, in a central axial annular section.

6. Connecting assembly according to Claim 4, **characterized in that** the spacer ring (7) is designed as a cylindrical deformed part with radial webs (16) pointing inward at both ends and with a possible narrowing (17), and/or **in that** the spacer ring (7) is designed as a corrugated ring.

7. Connecting assembly according to one of Claims 1 to 6, **characterized in that** the molded sheet-metal parts (2, 3) are connected fixedly to each other by welding, and/or **in that** the molded sheet-metal parts (2, 3) are arranged transversely with respect to the axis of rotation of the rolling bearing.

8. Connecting assembly according to at least one of Claims 1 to 7, **characterized in that** the two edges (8, 9) of the molded sheet-metal parts (2, 3), which edges delimit the circular openings (5, 6), have an encircling thickened portion (18).

9. Connecting assembly according to at least one of Claims 1 to 8, **characterized in that** the bearing receptacle (10) has stepped or conical cross sections corresponding to the outer bearing ring (11).

10. Method for the production of an assembly on a motor vehicle for connecting an outer bearing ring (11) of a rolling bearing and a wheel support (1), wherein the wheel support (1) is formed by two saucer-type molded sheet-metal parts (2, 3) which can be connected fixedly to form a hollow profile, and the molded sheet-metal parts (2, 3) respectively have a circular opening (5, 6) which is coaxial with respect to the axis of rotation of the rolling bearing, said openings being spaced apart from each other, **characterized by** the following method steps to be carried out successively:
a) between the two mutually spaced-apart circular openings (5, 6) of the molded sheet-metal parts (2, 3), a spacer ring (7) which is axially supported on the inside on the two edges (8, 9) of the molded sheet-metal parts (2, 3), which edges delimit the openings (5, 6), is positioned in such a manner that a tubular bearing receptacle (10) is formed for the outer bearing ring (11) of the rolling bearing.
b) The two molded sheet-metal parts (2, 3) are connected fixedly to each other.
c) An outer bearing ring (11) which is designed at one end with an annular section (13) which, in the fitted state, protrudes axially over the annular bearing receptacle (10) formed, is pushed into the bearing receptacle (10).
d) The annular section (13) of the outer bearing ring (11), which annular section protrudes axially over the bearing receptacle (10), is deformed by a deformation operation to form a collar (14).

11. Method according to Claim 10, **characterized in that**, with regard to the method step a), the two edges (8, 9) of the molded sheet-metal parts (2, 3), which edges delimit the circular openings (5, 6), are each provided before-hand with an encircling thickened portion (18).

12. Method according to Claim 11, **characterized in that** the thickened portions (18) are formed by folding over or compressing the respective edge (8, 9) of the molded sheet-metal parts (2, 3).

13. Method according to at least one of Claims 10 to 12, **characterized in that**, with regard to the method step b), the two molded sheet-metal parts (2, 3) are connected fixedly to each other by welding.

14. Method according to at least one of Claims 10 to 13, **characterized in that**, with regard to the method step d), the annular section (13) of the outer bearing ring (11) of the rolling bearing, which annular section protrudes over the bearing receptacle (10), is deformed, in particular deformed cold, by a rolling rivet process.

15. Method according to at least one of Claims 10 to 14, **characterized in that** there is already a restraining flange at the other end of the outer bearing ring, or such a restraining flange is formed by deformation, in particular corresponding to the method step d).

## Revendications

1. Système d'assemblage sur un véhicule automobile entre une bague de palier extérieure (11) d'un palier à roulement et un support de roue (1), le support de roue (1) étant formé par deux pièces façonnées en tôle (2, 3) en forme de coque pouvant être assemblées fixement pour former un profilé creux, et les pièces façonnées en tôle (2, 3) présentant chacune une ouverture (5, 6) de forme circulaire coaxialement à l'axe de rotation (4) du palier à roulement, lesquelles ouvertures sont disposées à distance l'une de l'autre, **caractérisé en ce que** ladite distance est occupée par une bague d'espacement (7) qui s'appuie axialement à l'intérieur contre les bords (8, 9) des pièces façonnées en tôle (2, 3) limitant les deux ouvertures de forme circulaire (5, 6) de telle sorte qu'un logement de palier de forme tubulaire (10) soit formé pour la bague de palier extérieure (11) du palier à roulement, et **en ce que** les pièces façonnées en tôle (2, 3) sont assemblées fixement à la bague d'espacement (7) et à la bague de palier extérieure (11) du palier à roulement par un engagement par correspondance géométrique et par friction.

2. Système d'assemblage selon la revendication 1, **caractérisé en ce que** la bague de palier extérieure (11) du palier à roulement présente au moins à une extrémité une bride annulaire inclinée radialement (12) au moyen de laquelle la bague de palier extérieure (11) s'appuie axialement dans l'état monté sur un côté frontal associé du logement de palier (10) de forme tubulaire formé, et/ou présente au moins à l'autre extrémité une portion annulaire (13) saillant axialement au-delà du logement de palier (10), qui peut être déformée par formage pour donner un épaulement (14) et qui peut être fixée axialement à l'autre côté frontal extérieur du logement de palier de forme tubulaire (10).

3. Système d'assemblage selon la revendication 2, **caractérisé en ce que** la portion annulaire (13) de la bague de palier extérieure (11) du palier à roulement saillant au-delà du logement de palier (10) peut être déformée selon un procédé de laminage-rivetage, en particulier peut être déformée à froid.

4. Système d'assemblage selon au moins l'une quelconque des revendications 1 à 3, **caractérisé en ce que** la bague d'espacement (7) est réalisée de manière flexible de telle sorte que l'assemblage constitué des pièces façonnées en tôle (2, 3), de la bague d'espacement (7) et de la bague de palier extérieure (11) du palier à roulement puisse être serré en soi par déformation de la portion annulaire (13) saillant au-delà du logement de palier (10).

5. Système d'assemblage selon la revendication 4, **caractérisé en ce que** la bague d'espacement (7) présente, dans une portion annulaire axiale centrale, un ou plusieurs rétrécissements (15), en particulier des rétrécissements disposés radialement à l'intérieur ou à l'extérieur.

6. Système d'assemblage selon la revendication 4, **caractérisé en ce que** la bague d'espacement (7) est réalisée sous forme de pièce façonnée cylindrique avec des nervures radiales (16) tournées vers l'intérieur aux deux extrémités et un éventuel rétrécissement (17), et/ou **en ce que** la bague d'espacement (7) est réalisée sous forme de bague ondulée.

7. Système d'assemblage selon au moins l'une quelconque des revendications 1 à 6, **caractérisé en ce que** les pièces façonnées en tôle (2, 3) sont assemblées fixement l'une à l'autre par soudage et/ou **en ce que** les pièces façonnées en tôle (2, 3) sont disposées transversalement à l'axe de rotation du palier à roulement.

8. Système d'assemblage selon au moins l'une quelconque des revendications 1 à 7, **caractérisé en ce que** les deux bords (8, 9) des pièces façonnées en tôle (2, 3) limitant les ouvertures de forme circulaire (5, 6) présentent un épaississement périphérique (18).

9. Système d'assemblage selon au moins l'une quelconque des revendications 1 à 8, **caractérisé en ce que** le logement de palier (10) présente des sections transversales étagées ou coniques correspondant à la bague de palier extérieure (11).

10. Procédé de fabrication d'un système d'assemblage sur un véhicule automobile entre une bague de palier extérieure (11) d'un palier à roulement et un support de roue (1), le support de roue (1) étant formé par deux pièces façonnées en tôle (2, 3) en forme de coque pouvant être assemblées fixement pour former un profilé creux, et les pièces façonnées en tôle (2, 3) présentant chacune une ouverture (5, 6) de forme circulaire coaxialement à l'axe de rotation (4) du palier à roulement, lesquelles ouvertures sont disposées à distance l'une de l'autre, **caractérisé par** les étapes de procédé suivantes à effectuer successivement :
a) entre les deux ouvertures de forme circulaire (5, 6) espacées l'une de l'autre des pièces façonnées en tôle (2, 3) est positionnée une bague d'espacement (7) s'appuyant axialement à l'intérieur contre les deux bords (8, 9) des pièces façonnées en tôle (2, 3) limitant les ouvertures (5, 6), de telle sorte qu'un logement de palier de forme tubulaire (10) soit formé pour la bague de palier extérieure (11) du palier à roulement,
b) les deux pièces façonnées en tôle (2, 3) sont connectées fixement l'une à l'autre,
c) une bague de palier extérieure (11) réalisée à une extrémité avec une portion annulaire (13) saillant axialement dans l'état monté au-delà du logement de palier de forme annulaire formé (10) est enfoncée dans le logement de palier (10),
d) la portion annulaire (13) de la bague de palier extérieure (11) saillant axialement au-delà du logement de palier (10) est déformée par formage pour donner un épaulement (14).

11. Procédé selon la revendication 10, **caractérisé en ce que** dans le cadre de l'étape de procédé a), les deux bords (8, 9) des pièces façonnées en tôle (2, 3) limitant les ouvertures de forme circulaire (5, 6) sont pourvus au préalable d'un épaississement périphérique (18).

12. Procédé selon la revendication 11, **caractérisé en ce que** les épaississements (18) sont formés par repliement ou écrasement du bord respectif (8, 9) des pièces façonnées en tôle (2, 3).

13. Procédé selon au moins l'une quelconque des revendications 10 à 12, **caractérisé en ce que** dans le cadre de l'étape de procédé b), les deux pièces façonnées en tôle (2, 3) sont assemblées fixement l'une à l'autre par soudage.

14. Procédé selon au moins l'une quelconque des revendications 10 à 13, **caractérisé en ce que** dans le cadre de l'étape de procédé d), la portion annulaire (13) de la bague de palier extérieure (11) du palier à roulement saillant au-delà du logement de palier (10) est déformée selon un procédé de laminage-rivetage, en particulier est déformée à froid.

15. Procédé selon au moins l'une quelconque des revendications 10 à 14, **caractérisé en ce qu'**à l'autre extrémité de la bague de palier extérieure existe déjà un bord ou est formé un tel bord, notamment selon l'étape de procédé d), par formage.
